Europäisches Patentamt

European Patent Office

Office européen des brevets

(11) Publication number: **0 100 219**
**B1**

## EUROPEAN PATENT SPECIFICATION

(45) Date of publication of patent specification: **08.06.88**

(51) Int. Cl.⁴: **F 16 L 27/08**

(21) Application number: **83304267.4**

(22) Date of filing: **22.07.83**

(54) **A rotary joint.**

(30) Priority: **23.07.82 CA 407922**

(43) Date of publication of application:
**08.02.84 Bulletin 84/06**

(45) Publication of the grant of the patent:
**08.06.88 Bulletin 88/23**

(84) Designated Contracting States:
**DE FR GB IT NL SE**

(56) References cited:
**DE-B-1 525 721**
**GB-A-1 603 163**
**US-A-1 888 026**
**US-A-2 557 140**
**US-A-3 057 646**
**US-A-3 754 779**
**US-A-3 759 550**

(73) Proprietor: **INTERNATIONAL HARD SUITS INC.**
**1600 - 595 Burrard Street**
**Vancouver British Columbia V7X 1K9 (CA)**

(72) Inventor: **Nuytten, Rene T.**
**432 Glenview Crescent**
**North Vancouver British Columbia (CA)**

(74) Representative: **Haggart, John Pawson et al**
**Page, White & Farrer 5 Plough Place New Fetter Lane**
**London EC4A 1HY (GB)**

Courier Press, Leamington Spa, England.

## Description

This invention relates to a rotary joint which is particularly useful for deep-sea diving suits and similar apparatus.

In deep-sea diving suits in particular, it is desirable to have joints which can readily rotate, as well as joints which are capable of flexion-extension. A number of such joints have been provided in the past. However, as external pressure on the joints increases, as will occur when a diving suit is submerged to greater depths, such joints tend to experience severely increased friction.

Longitudinally flexible joints have been described in the past which utilize a fluid-filled chamber to attempt to minimize such increased friction. For example, US—A—3 759 550 discloses a flexible joint having an annular, partially spherical, male member movably housed within an annular, partially spherical female member. The chamber formed between the male and female members is filled with a suitable fluid. Sealing means are provided on the female member wall. Although such a configuration helps to reduce the effect of increased external pressure, such configuration suffers from the difficulty that over a period of use a small amount of liquid from the chamber be lost, and the male and female members thereby get out of alignment, resulting in jamming of both members when it is attempted to flex the joint. As well, great care must be taken to ensure that there are no small air bubbles remaining within the fluid in the chamber, since again at high external pressure such air will tend to compress resulting in a decrease of the volume of the chamber and consequent misalignment of the male and female members and seizure of the joint. Such a result can also follow where the joint is subjected to a very high external pressure, since even liquids are compressible to some degree under such pressures. In addition, the seals on the female member must press hard against the male member to prevent oil leakage into the hollow tubes connected by the joint. Such pressing is itself a source of rotational friction.

Other joints have been described in the past, which utilize a fluid-filled chamber between the two connecting sections, such joints are disclosed for example, in US—A—2 557 140, US—A—3 754 779, and US—A—1 888 026. Such joints though, tend to suffer from one or more of the above difficulties or from relative complexity of structure or leakage at high external pressures.

US—A—3 057 646 describes a cooled rotary seal between a fixed pipe and a rotating pipe of a rotary kiln. The ends of the pipes are separated and a rotary seal is maintained between stator rings of bronze or carbon located around the end of the fixed pipe and rotor rings of a hard material such as tungsten carbide or ceramic which are slidable in an annular flange around the end of the rotating pipe, and are spring-urged towards the stator rings. A liquid coolant can be introduced.

It is desirable then to provide a rotary joint, a plurality of which can be used to form a flexion-extension joint, which flexion-extension joint would be particularly useful in deep-sea diving, and in which rotational friction of each rotary joint would not be substantially increased with large increases in external pressure, which would maintain a good seal despite such large increases in pressure, and which is relatively simple to assemble.

The invention provides a rotary joint for connecting tubes in a high pressure environment such as deep-sea diving, comprising relatively rotatable annular members at the ends of respective tubes one of which annular members includes annular engagement members, an annular central member being slidable relative to the other annular member with a chamber therebetween, which central member includes annular bearing portions which are urged by a resilient member into sealing engagement with the annular engagement members, the central member having annular surfaces facing towards respective annular members, one said surface forming a chamber with said other annular member, characterised in that the other said surface forms a chamber with said one annular member, which chambers are interconnected with one another and sealed from the high pressure environment, the annular surfaces of the central member thus being subjected to counterbalancing opposed forces due to fluid pressure in the interconnected chambers caused by compression of the joint, the engagement members being sealing members so that the sealing engagement between the annular bearing portions and the annular sealing member is maintained by the resilient member independently of changes of pressure of the external environment.

An embodiment of the invention will now be described by way of example, with reference to the drawings, in which:—

Fgure 1 is a partially cut-away side elevation of a rotary joint of the present invention,

Figure 2 is an enlarged portion of the cut-away portion of Figure 1,

Figure 3 is a side elevation of a flexion-extension joint incorporating three rotary joints of the present invention, and

Figure 4 is a side elevation view of the joint of Figure 3, flexed approximately 90° from the position shown in Figure 3.

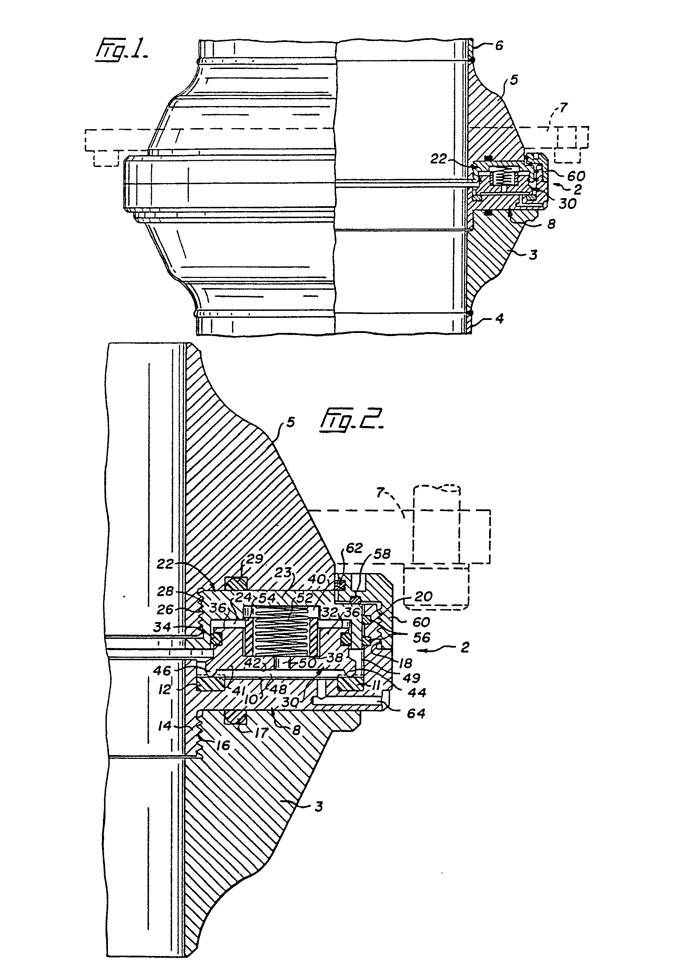

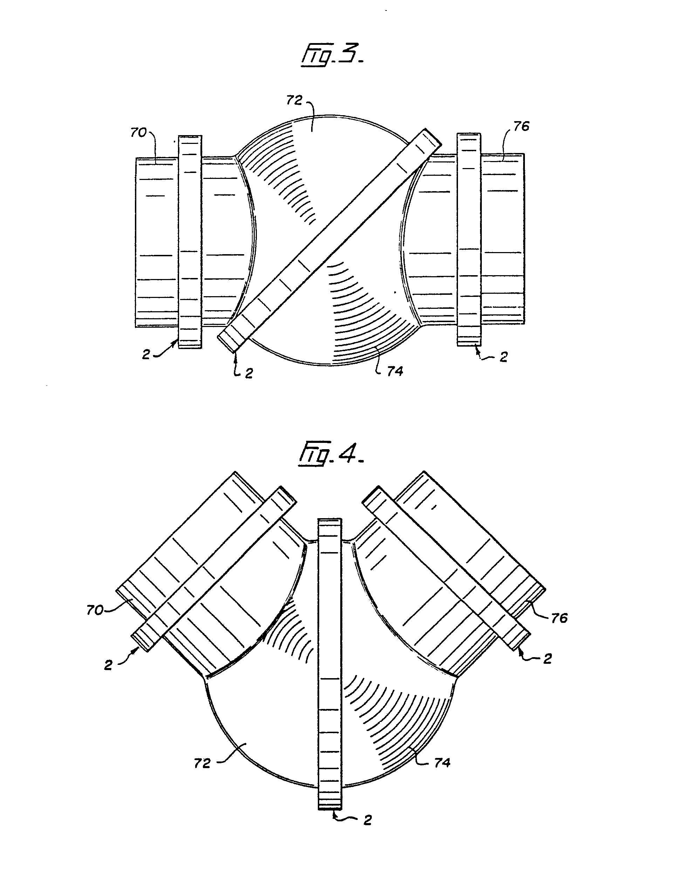

Referring first to Figures 1 and 2, a rotary joint 2 is provided which connects cylindrical tubes 4 and 6, each of which has an annular support portion 3 and 5 respectively for the rotary joint 2. Annular portion 5 can be replaced with an annular flange 7 (shown in broken lines) if it is desired to connect the joint to a flat surface. The rotary joint 2 has a sealing member 8 with a sealing end 10' extending between and supporting inner and outer annular sealing surface portions 11 and 12 respectively. The sealing surface portions 11 and 12 face in the same axial direction and lie in a common transverse plane, that is, their upper surfaces as is shown in Figures 1 and 2 lie in the same transverse plane. The sealing member 8 has an extension 14 threaded on its inside so as to mate with threaded portion 16 of support 3. An annular sealing ring 17 is provided between support 3 and sealing member 8 so as to prevent water leakage therebetween. The support member 8 also has a second annular threaded portion 18, the threads of which mate with threaded portion 20 of collar 60.

A retaining member 22 is provided which is axially spaced from sealing member 8. The retaining member 22 is provided with an annular retaining end 23, the retaining end 23 being that portion adjacent the annular recess 24 in retaining member 22, which retains an end of an annular central member 30. The annular end 23 is concentric with the sealing surface portions 11 and 12. The retaining member 22 is also provided with an outwardly threaded portion 26 which mates with a threaded portion 28 of the support 5. An annular sealing ring 29 is provided between the support 5 and sealing member 22 to prevent water leakage therepast.

The central member 30 is disposed axially between the sealing member 8 and retaining member 22. The central member 30 is provided with an annular first end 32 which is axially slidably mounted within the recess 24 of the retaining end 23 by means of a sealing O-ring 34 extending therebetween, so as to define a first variable volume chamber 40 between the first end 32 of central member 30 and the retaining end 23 of retaining member 22. The first end 32 of the central member 30 has a first inner surface which is the combination of annular surface portions 36 and 38, this inner surface axially facing the retaining end 23 of the retaining member 22. The central member 30 also has a second end 41 with a second inner surface 42 axially facing the sealing end 10. The total transverse area of the first inner surface (that is, the total transverse area of surface sections 36 and 38) is equal to the total transverse area of the second inner surface 42.

The central member 30 also has inner and outer axially extending annular bearing members, 44 and 46 respectively. Each of the bearing members 44 and 46 is concentric with, and normally rotatably abuts a corresponding one of the sealing surface portions 11 and 12 respectively. In such a configuration, the bearing members 44 and 46 define annular side walls of a second chamber 48 between the first end 41 of the central member 30 and the sealing end 10 of the sealing member 8. The second chamber 48 is interconnected with the first chamber 40 by means of an annular opening 50 through the central member.

A plurality of springs 52 are provided within the first chamber 40, which springs extend between the retaining end 23 of the retaining member 22, and the surface portion 38 of the central member 30, so as to urge the bearing members 44 and 46 against respective sealing surface portions 11 and 12. A hollow cylindrical housing 54 is provided for each spring 52 in order to help retain the shape of that spring 52.

The annular portion 18 of sealing member 8 is provided with two annular radially extending bearing rings 56, which both abut the retaining member 22 but do not abut it with such force that water under pressure cannot pass therebetween and into a third chamber 49. The outer collar 60 is also provided with an annular bearing ring 58, and felt wiper 62, which respectively abut retaining member 22 and support 5, but again allow water under pressure to pass therebetween. A bore 64 extends between the chamber 48 and the exterior of the rotary joint.

The rotary joint as described is typically constructed from steel, the bearing member 44 and 46 preferably being of stainless steel. The sealing surface portions 11 and 12, and annular sealing rings 56 and 58, can be made of a deformable low friction material, for example, an epoxy bonded tetrafluoroethylene plastic, such as that sold under the trade mark TEFLON. The joint can be assembled by first screwing on portion 14 of sealing member 8 onto the threaded portion 16 of support portion 3. The central member 30, springs 52 and supports 54, can then be positioned between the sealing member 8 and the support member 22 with sufficient force being applied to retaining member 22 so that collar 60 can be screwed onto threaded portion 18 of sealing member 8. The threaded portion 26 of retaining member 22 may then be screwed onto the threaded portion 28 of support member 5. Following this procedure, the chambers 40, 48 and annular opening 50 can then be filled with oil through oil passage 64. Oil passage 64 can then be sealed in any suitable manner, such as with a threaded plug.

The operation of one rotary joint 2 is as follows. When the joint is submerged in water, chamber 49 will fill with water flowing past wiper 62 and bearing surfaces 58 and 56. When the joint is subjected to high external pressure, tubes 4 and 6 and respective support portions 3 and 5 will tend to telescope inward to compress the joint 2. This force of compression will be translated into a fluid pressure in chambers 40, 48 and annular hole 50. As a result of such fluid pressure, a force will be generated in chamber 40 between the retaining surface 23 of retaining member 22, and the first end 32 of central member 30. This force will vary directly with the total surface area of the first surface of first end 32 which is facing the retaining end 23 (again, this being the total surface area of surface portions 36 and 38). This force will tend to push the central member 30 toward the sealing member 8. In addition though, a force will be produced in chamber 48 which is proportional to the total transverse surface area of the second surface 42. This force will tend to push central member 30 away from the sealing member 8. When the whole transverse surface area of the first inner surface facing the retaining end 23 of retaining member 22 (that is, the total transverse surface area of surface portions 36 and 38) is equal to the total transverse surface area of the second surface 42 facing the sealing surface 10, the two mentioned forces will be equal and the central member 30 will tend to stay in a position with the bearing members 44 and 46 rotatably abutting respective sealing surface portions 11 and 12 as a result of only a net pressure from springs 52. Should a small amount of oil be lost from chambers 40, 48 and annular opening 50 after a period of use of the joint 2, or should the joint be used under very high external pressures resulting in compression of any gas bubbles which may be present in those chambers or opening, or slight compression of the oil, the net effect will simply be that bearing member 44 will be moved slightly closer toward sealing member 8. Thus, a diving suit utilizing a number of such joints would tend to contract in size a very slight amount under such circumstances. The retaining member 22 and support 5 can be rotated relative to sealing member 8 and support 3, the only resistance to such being primarily a result of spring pressure only through bearing surfaces 44 and 46 to sealing surfaces 11 and 12, as those bearing surfaces rotate thereon. Since a water tight fit is not required at felt wiper 62 and bearing rings 56, 58 and ring 62, little resistance is offered by them to rotation of joint 2, such elements serving primarily merely to keep dirt out of the joint 2.

The springs 52 ensure that a constant pressure is maintained on bearing members 44 and 46 against their respective slightly deformable sealing surface portions 11 and 12, respectively, so as to prevent water or oil from leaking therepast.

A number of such joints 2 can be utilized to produce a flexion-extension joint in the manner shown in Figures 3 and 4. A first tubular portion 70 is connected through a joint 2 to a partially spherical portion 72, which is in turn connected through another joint 2 to another partially spherical tubular portion 74. This second partially spherical tubular portion 74 is connected through a third joint to a third tubular portion 76. Thus, a flexion-extension joint is created. When an internal force is applied to tubular sections 70 and 76, for example by flexing of a limb, sections 72 and 74 will rotate by means of their respective joints 2 interconnecting them with adjacent tubular portions 70 and 76 respectively, so as to bring their narrowest sections together at one point and their widest sections together at a point slightly less than 180° away, or any degree inbetween. Thus, the configuration in Figure 4 (which shows the joint bent at an angle of slightly less than 90°) or any desired bend less than that shown in Figure 4 is obtained by such flexion. Blocks (not shown) must be provided on the two outermost joints 2 on two of the tubular portions, which will contact one another prior to the joint flexing to 90° and prevent further flexion. Should the joint reach 90°, it would of course lock up and could no longer be straightened.

## Claims

1. A rotary joint for connecting tubes (3, 5) in a high pressure environment such as deep-sea diving, comprising relatively rotatable annular members (8, 22) at the ends of respective tubes (3, 5) one of which annular members (8) includes annular engagement members (11, 12), an annular central member (30) being slidable relative to the other annular member (22) with a chamber (40) therebetween, which central member (30) includes annular bearing portions (44, 46) which are urged by a resilient member (52) into selaing engagement with the annular engagement members (11, 12), the central member (30) having annular surfaces (32, 38; 42) facing towards respective annular members (8, 22) one said surface forming a chamber (40) with said other annular member, characterized in that the other said surface forms a chamber with said one annular member (8), which chambers are interconnected with one another and sealed from the high pressure environment, the annular surfaces of the central member (30) thus being subjected to counterbalancing opposed forces due to fluid pressure in the interconnected chambers (40, 48) caused by compression of the joint, the engagement members being sealing members so that the sealing engagement between the annular bearing portions (44, 46) and the annular sealing members (11, 12) is maintained by the resilient member (52) independently of changes of pressure of the external environment.

2. A rotary joint as claimed in Claim 1, characterised in that the total transverse area of one annular surface (32, 38) of the central member (30) is substantially equal to the total transverse area of the other annular surface (42) of the central member (30).

3. A rotary joint as claimed in Claim 2, characterised in that the chambers (40, 48) are interconnected by an opening (50) through the central member (30).

4. A rotary joint as claimed in any one of Claims 1 to 3, characterised in that the chamber (40, 48) is filled with oil and then sealed.

**Patentansprüche**

1. Ein Drehgelenk zum Verbinden von Rohren (3, 5) in einer Hochdruckumgebung wie beim Tiefseetauchen mit relativ drehbaren ringförmigen Teilen (8, 22) an den Enden der betreffenden Rohre (3, 5), wobei eines der ringförmigen Teile (8) ringförmige Eingriffelemente (11, 12) umfaßt, ein im Verhältnis zu dem anderen ringförmigen Teil (22) gleitfähiges ringförmiges Mittelteil (30) mit einer zwischen den beiden Teilen befindlichen Kammer (40) vorgesehen ist, und das besagte Mittelteil (30) ringförmige Auflagebereiche (44, 46) besitzt, die durch ein elastisches Teil (52) in abdichtenden Eingriff mit den ringförmigen Eingriffselementen (11, 12) gepreßt werden, das Mittelteil (30) ringförmige Oberflächen (32, 38; 42) hat, die auf die betreffenden ringförmigen Teile (8, 22) gerichtet sind und eine der besagten Oberflächen eine Kammer (40) mit dem besagten anderen ringförmigen Teil befindet, dadurch gekennzeichnet, daß die andere besagte Oberfläche mit dem besagten einen ringförmigen Teil (8) eine Kammer bildet und diese Kammern miteinander in Verbindung stehen und der Hochdruckumgebung gegenüber abgedichtet sind, die ringförmigen Oberflächen des Mittelteils (30) daher infolge des durch Kompression des Gelenks verursachten Flüssigkeitsdrucks in den miteinander in Verbindung stehenden Kammern (40, 48) einander ausgleichenden entgegengesetzten Kräften ausgesetzt sind und die Eingriffselemente Abdichtelemente sind, so daß durch das elastische Teil (52) unabhängig von Änderungen des Umgebungsdrucks der abdichtende Eingriff zwischen den ringförmigen Auflagebereichen (44, 46) und den ringförmigen Abdichtteilen (11, 12) aufrechterhalten wird.

2. Ein Drehgelenk im Einklang mit Anspruch 1, dadurch gekennzeichnet, daß die gesamte Querschnittfläche der einen ringförmigen Oberfläche (32, 38) des Mittelteils (30) im wesentlichen der gesamten Querschnittfläche der anderen ringförmigen Oberfläche (42) des Mittelteils (30) gleich ist.

3. Ein Drehgelenk im Einklang mit Anspruch 2, dadurch gekennzeichnet, daß die Kammern (40, 48) durch eine durch das Mittelteil (30) führende Öffnung (50) verbunden sind.

4. Ein Drehgelenk im Einklang mit einem der Ansprüche 1 bis 3, dadurch gekennzeichnet, daß die Kammer (40, 48) mit Öl gefüllt und dann abgedichtet wird.

### Revendications

1. Un joint rotatif pour raccorder les tubes (3, 5) en environment à haute pression tel qu'en plongée sous-marine, comprenant des members annulaires (8, 22) relativement rotatoires aux extrémités des tubes (3, 5) respectifs dont l'un des members annulaires (8) comprend des members annulaires (11, 12) de contact, un membre central annulaire (30) pouvant glisser relativement à l'autre member annulaire (22) avec une chambre (40) entre cela, lequel member central (30) comprend des portions d'appui annulaires (44, 46) qui sont forcées par un membre résilient (52) au contact étanche avec les membres annulaires (11, 12) à engagement, le member central annulaire (30) ayant des surfaces annulaires (32, 38; 42) étant faces aux members annulaires respectifs (8, 22) unedite surface formant une chambre (40) avec l'autredit member annulaire, caractérisé en ce que l'autredite surface forme une chambre avec ledit membre annulaire (8), lesquelles chambres sont en communications l'une avec l'autre et étanches contre l'environnement à haute pression, les surfaces annulaires du membre central (30) étant ainsi soumises à des forces opposées à équilibrage par la pression du fluide dans les chambres de communication (40, 48) causée par la compression du joint, les membres d'engagement étant des membres d'étanchement de sorte que le contact entre les portions d'appui annulaires (44, 46) et les members annulaires d'étanchement (11, 12) soit maintenu par le membre résilient (52) indépendemment des changements de pression de l'environnement externe.

2. Un joint rotatif selon Revendication 1, caractérisé en ce que la superficie totale transversale d'une seule surface annulaire (32, 38) du membre central (30) est substantiellement égale à la superficie totale transversale de l'autre surface annulaire (42) du membre central (30).

3. Un joint rotatif selon Revendication 2, caractérisé en ce que les chambres (40, 48) sont communicantes par une ouverture (50) au travers du member central (30).

4. Un joint rotatif selon l'une quelconque des Revendications 1 à 3, caractérisées en ce que la chambre (40, 48) est emplie d'huile ensuite fermée de façon étanche.

_Fig.1._

6
5
7
22
60
2
30
8
3
4

5
_Fig.2._

7
22
29
62
58
23
40
28
24
54
52
60
26
36
32
36
56
34
20
2
18
42
50
38
46
49
12
41
48
44
14
10
17
8
64
16
3
30
11

_Fig.3._

_Fig.4._